# EUROPÄISCHE PATENTSCHRIFT

(11) **EP 2 686 176 B1**
(45) Veröffentlichungstag und Bekanntmachung des Hinweises auf die Patenterteilung: **02.03.2016**
(21) Anmeldenummer: 12711374.4
(22) Anmeldetag: 14.03.2012
(51) Int. Cl.: B60G 7/00, B62D 65/12, B21D 5/00, B23P 15/00

(54) **LENKER FÜR EINE FAHRZEUGRADAUFHÄNGUNG**
SUSPENSION ARM FOR A VEHICLE WHEEL SUSPENSION SYSTEM
SYSTÈME DE DIRECTION POUR UNE SUSPENSION DE ROUE D'UN VÉHICULE

(30) Priorität: 17.03.2011 DE 202011000609 U
(43) Veröffentlichungstag der Anmeldung: 22.01.2014
(73) Patentinhaber: Kirchhoff Automotive Deutschland GmbH, 57439 Attendorn (DE)
(72) Erfinder: REINSCH, Georg, 58640 Iserlohn (DE); MICHLER, Stefan, 57439 Attendorn (DE); JUNGLAS, Dirk, 56761 Düngenheim (DE)
(74) Vertreter: Haverkamp, Jens
(86) Internationale Anmeldenummer: PCT/EP2012/054430
(87) Internationale Veröffentlichungsnummer: WO 2012/123477

(56) Entgegenhaltungen:
- EP-A1- 0 760 300
- EP-A1- 1 619 055
- EP-A1- 2 295 269
- EP-A2- 0 794 075
- EP-A2- 1 223 058
- EP-A2- 2 409 862
- WO-A1-2010/089705
- WO-A2-2010/004414
- DE-A1- 10 212 791
- DE-A1-102005 052 336
- DE-C1- 10 140 288
- FR-A1- 2 882 692
- JP-A- 8 332 820
- US-A1- 2010 264 615

## Beschreibung

Die Erfindung betrifft einen Lenker für eine Fahrzeugradaufhängung, gefertigt als Blechumformteil mit wenigstens zwei Anschlussstellen, umfassend einen wenigstens zwei Anschlussstellen verbindenden Boden, eine der Längserstreckung des Bodens folgende Einprägung, wodurch entlang derselben parallel oder etwa parallel zu dem äußeren Rand des Bodens verlaufende innere Versteifungsschenkel gebildet sind, und eine in den Boden der Einprägung eingebrachte Durchgriffsöffnung mit einem an den Boden angeformten Kragen.

Lenker der vorgenannten Art werden beispielsweise in Form von Querlenkern als eine von mehreren Komponenten einer Fahrzeugradaufhängung verwendet. Derartige Lenker verfügen typischerweise über drei Anschlussstellen. Einer dieser Anschlussstellen ist an eine das Rad tragenden Fahrzeugwerkskomponente angeschlossen. Die anderen beiden sind gelenkig fahrzeugseitig festgelegt, zumeist durch Verwendung von Gumm i-Metall-Verbundlagern.

Neben der Möglichkeit, derartige Lenker durch Schmieden herzustellen, werden diese auch als Stahlblechumformteile gefertigt. Geschmiedete Lenker werden aus einem Leichtmetall, typischerweise einer geeigneten Aluminiumlegierung hergestellt. Daher weisen diese zwar nur ein relativ geringes Gewicht auf. Infolge des Leichtmetalls sind derartige Lenker jedoch kostenträchtiger als solche, die im Wege eines Umformprozesses aus Blech, insbesondere einem Stahlblech hergestellt werden. Um den Anforderungen an die gewünschten Festigkeiten an einen Lenker aus umgeformtem Stahlblech zu genügen, werden entsprechend zugeschnittene Blechrohlinge zum Ausbilden einer profilierten Querschnittsgeometrie umgeformt, und zwar typischerweise im Wege eines Ziehprozesses, typischerweise einem Streckziehen. Durch den Umformprozess werden beispielsweise äußere Flansche als Versteifungsschenkel gebildet, die gegenüber der Ebene des die Anschlussstellen verbindenden Bodens abgekantet sind. Auch andere Profilierungen sind bekannt. Durch diese erhält der Lenker seine notwendige Formstabilität. Derartige Lenker sind beispielsweise aus DE 102 12 791 A1 oder EP 1 223 058 A1 bekannt.

Vor dem Hintergrund kompakt bauender Fahrzeugradaufhängungen ist es mitunter erforderlich, in den Boden eines solchen Lenkers eine Durchgriffsöffnung einzubringen, damit durch diese hindurch hinter dem Lenker befindliche Komponenten bzw. Befestigungen derselben mittels eines Werkzeuges, etwa eines Schraubers zugänglich sind, ohne den Lenker selbst demontieren zu müssen. Derartige Durchgriffsöffnungen befinden sich, wie auch in den beiden vorgenannten Dokumenten gezeigt, etwa in der Mitte zwischen der radseitigen Anschlussstelle und der von dieser entfernteren fahrzeugseitigen Anschlussstelle.

Das Einbringen einer Durchgriffsöffnung gerade in diesem Bereich führt zu einer Schwächung des Querlenkers vor allem im Hinblick auf seine Knickfestigkeit. Um die durch den Durchgriff eingebrachte Schwächung zumindest etwas zu kompensieren, ist an den Boden ein umlaufender, die Durchgriffsöffnung einfassender Kragen angeformt. Dieser wird durch einen Ziehprozess, bei dem durch eine zuvor ausgestanzte Öffnung ein Ziehdorn hindurchgeführt wird, erstellt. Die Durchgriffsöffnungen weisen eine kreisrunde Querschnittsgeometrie auf. Um einen solchen Querlenker durch Einbringen der notwendigen Durchgriffsöffnung nicht zu sehr zu schwächen, befindet sich die Durchgriffsöffnung bei dem aus DE 102 12 791 A1 bekannt gewordenen Querlenker beabstandet zu dem äußeren Flansch. Bei dem aus EP 1 223 058 A1 bekannt gewordenen Querlenker verfügt der Boden über eine seiner Längserstreckung folgende Einprägung. Durch diese Einprägung ist entlang derselben und parallel oder etwa weitestgehend parallel zu den äußeren Flanschen ein innerer Versteifungsschenkel gebildet. Um durch die Durchgriffsöffnung den inneren Versteifungsschenkel nicht zu schwächen, befindet sich bei dieser Ausgestaltung die Durchgriffsöffnung mit Abstand zu dem inneren Versteifungsschenkel.

Bodeneinprägungen werden durch einen Ziehprozess hergestellt mit der Folge, dass im Bereich der inneren Versteifungsschenkel eine Materialausdünnung stattfindet. Daher verbietet dieses Herstellungsverfahren das Anordnen der Durchgriffsöffnung unmittelbar angrenzend an einen solchen inneren Versteifungsschenkel. Innerhalb des auzubildenden, die Durchgriffsöffnung einfassenden Kragens wäre sodann zumindest in diesem Bereich eine nicht mehr hinnehmbare Materialausdünnung vorhanden. Diesem Nachteil kann zwar durch Einsatz eines stärkeren Ausgangsmaterials begegnet werden. Allerdings würde sich dann das Gewicht des Lenkers in einem nicht hinnehmbaren Maße erhöhen. Aus diesen Gründen ist eine Vergrößerung der Durchgriffsöffnung nicht ohne Einbuße hinsichtlich seiner Festigkeit möglich, es sei denn, dass der Querlenker insgesamt entsprechend breiter ausgelegt werden würde, damit die Durchgriffsöffnung trotz größerer Durchgriffsöffnung noch einen genügenden Abstand von dem inneren Versteifungsschenkel aufweist.

FR 28 82 692 A1 offenbart einen weiteren relevanten Lenker mit einer in einer Einprägung eingebrachte Durchgriffsöffnung, die eine kreisrunde Querschnittsgeometrie, welche durch sich zumindest teilweise in ihrer Begrenzungskontur unterscheidende Durchgriffsöffnungsabschnitte gebildet wird, aufweist.

Ausgehend von diesem diskutierten Stand der Technik liegt der Erfindung die Aufgabe zugrunde, einen eingangs genannten Lenker dergestalt weiterzubilden, dass die Weite einer Durchgriffsöffnung in Richtung der Breite eines Lenkers größer vorgesehen sein kann, sich insbesondere bis an einen inneren Versteifungsschenkel erstrecken kann, ohne die zum Stand der Technik beschriebenden Nachteile bezüglich einer Materialschwächung hinnehmen zu müssen.

Gelöst wird diese Aufgabe erfindungsgemäß durch einen Lenker der eingangs genannten Art, bei dem sich die Durchgriffsöffnung im Bereich der Einprägung befindet und eine von der kreisrunden Querschnittsgeometrie abweichende Geometrie aufweist, welche Querschnittsgeometrie durch mehrere sich zumindest teilweise in ihrer Begrenzungskontur unterscheidende Durchgriffsöffnungsabschnitte gebildet wird, von welchen Abschnitten zumindest einer an den Verlauf des diesem nächstliegenden Versteifungsschenkels angenähert ist oder diesem wenigstens teilweise entspricht.

Bei diesem Lenker ist die Durchgriffsöffnung konzipiert, damit diese zumindest in einem Abschnitt der Durchgriffseinfassung an den Verlauf des zu diesem Abschnitt benachbarten bzw. nächstliegenden Versteifungsschenkels angenähert ist oder diesem sogar über einen gewissen Abschnitt entspricht. Diese Konzeption erlaubt es, dass im Zuge eines an sich üblichen Umformprozesses zum Ausbilden des die Durchgriffsöffnung einfassenden Kragens gerade im Bereich seines Abschnittes, der dem Verlauf des nächstliegenden inneren Versteifungsschenkels angenährt ist oder diesem zumindest teilweise entspricht, dass dieser Abschnitt aufgrund seines gegenüber den angrenzenden Durchgriffsöffnungsabschnitten sehr viel größeren Radius, zumindest abschnittsweise nicht oder nur in einem tolerierbaren Maß beim Vorgang des Umformens, dass heißt: Durch Formens des Kragens bzw. des diesbezüglichen Kragenabschnittes erfährt dieser keine oder zumindest weitestgehend keine Materialausdünnung. Folglich ist der Lenker durch diesen Durchgriffseinfassungsabschnitt mit seinem Kragen nicht geschwächt. Begründet liegt dieses darin, dass aufgrund der von der kreisrunden Querschnittsgeometrie abweichenden Geometrie zumindest ein derartiger Abschnitt ausgebildet werden kann, der beim Vorgang des Ausbildens des Kragens zumindest im überwiegenden Maße nur einem Biege- bzw. Abkantvorgang, typischerweise einem Schwenkbiegeprozess unterworfen ist, mithin einem Umformprozess, bei dem eine Materialausdünnung in den abgekanteten Abschnitten nicht oder so gut wie nicht stattfindet. Ausgenutzt wird bei diesem Konzept die im Zusammenhang mit dieser Erfindung gewonnene Erkenntnis, dass für die Festigkeit und Belastbarkeit des Lenkers der eine solche Durchgriffsöffnung einfassende Kragen umlaufend keine einheitliche Begrenzungsgeometrie aufweisen muss. Vielmehr kommt es auf diejenigen Kragenabschnitte an, die an den Verlauf des benachbarten Versteifungsschenkels angenährt sind oder diesem zumindest teilweise entsprechen. Daher können diese Abschnitte der Begrenzung der Durchgriffsöffnung bei der Konzeption eines Lenkers hinsichtlich ihrer Anteile am Umfang der Durchgriffsöffnung betont werden und nehmen typischerweise einen größeren Anteil ein als die sich quer dazu erstreckenden Durchgriffsöffnungseinfassungsabschnitte. Bei diesem Konzept kann zudem durch eine entsprechende Gestaltung der Geometrie des vor dem Ausformen des Kragens in den Boden eingebrachten Öffnung die Kragenhöhe in den an den Verlauf des benachbarten Versteifungsschenkels angenäherten oder diesem zumindest teilweise entsprechenden Abschnitten sogar höher vorgesehen werden als in den daran angrenzenden Abschnitten. Mithin kann auf diese Weise ein die Durchgriffsöffnung einfassender Kragen mit umlaufend unterschiedlicher Höhe erstellt werden. Dabei versteht es sich, dass durch eine entsprechend höhere Ausgestaltung des Versteifungsschenkels durch Anformen eines Kragenabschnittes die Steifigkeit zumindest in diesem Abschnitt des Lenkers erhöht wird.

Bei diesem Lenker kann sich die Durchgriffsöffnung bis an den inneren Versteifungsschenkel erstrecken, wobei letztendlich ein Abschnitt des Kragens Teil des inneren Versteifungsschenkels sein kann. Damit kann der zwischen den durch die typischerweise vorhandenen, aus der Ebene des Bodens randlich abgekanteten äußeren Flansche und den mit diesen einen prinzipiell U-förmigen Träger bildenden inneren Versteifungsschenkeln befindliche Raum vollständig oder im Wesentlichen vollständig für die Ausgestaltung einer Durchgriffsöffnung verwendet werden. Die vorbeschriebene Ausgestaltung der Durchgriffsöffnung mit der Möglichkeit den Kragen an unterschiedlichen Abschnitten unterschiedlich hoch ausgestalten zu können und die Erkenntnis, dass es maßgeblich für die Steifigkeit und die Knickfestigkeit des Lenkers auf die den Boden randlich begrenzende Profilierung ankommt, erlaubt auch die Ausgestaltung von Lenkern mit einer in der zwei Anschlussstellen verbindenden Richtung relativ großen Durchgriffsweite. Dabei versteht es sich, dass, je größer der Ausschnitt (Stanzling) ist, der aus dem Boden vor dem Ausformen des Kragens der Durchgriffsöffnung von dem Rohling entfernt wird, je leichter ist der Lenker.

Typischerweise ist die Querschnittsgeometrie der Durchgriffsöffnung elliptisch oder angenährt elliptisch. Auch andere Querschnittsgeometrien sind möglich.

Die vorbeschriebene Ausbildung der Durchgriffsöffnung eignet sich vor allem bei solchen Lenkerausgestaltungen mit einer mehrstufigen Einprägung und somit mit einem oder mehreren Bereichen mit einer ersten Prägetiefe und wenigstens einen Bereich mit einer zweiten Prägetiefe. Dabei ist vorgesehen, dass die zweite Prägetiefe größer ist als die erste Prägetiefe und sich die Durchgriffsöffnung in einem Bodenbereich der zweiten Prägetiefe befindet. Dieses schließt nicht aus, dass ein oder mehrere Durchgriffsöffnungen auch in den Bodenbereichen der ersten Prägetiefe angeordnet sein können. Erst durch die vorbeschriebene Konzeption des Ausbildens eines Abschnittes des Kragens der Durchgriffsöffnung ohne oder im wesentlichen ohne Materialausdünnung gestattet gerade bei einer solchen mehrstufigen Einprägung das Anordnen der Durchgriffsöffnung mit einem Kragenabschnitt als Teil des inneren Versteifungsschenkels einer Außenprofilierung. Auch ein mehr als zweistufiges Einprägen des Bodens ist möglich.

Die Durchgriffsöffnung kann sich, wenn gewünscht, zwischen zwei inneren Versteifungsschenkeln erstrecken, sodass die Durchgriffsöffnung zwei Abschnitte der vorgenannten Art umfasst und somit zwei Kragenabschnitte der Durchgriffsöffnung Teil des jeweils benachbarten inneren Versteifungsschenkels sind. Vor dem Hintergrund, dass mit derartigen Durchgriffsöffnungen Gewicht gespart werden kann, kann ein solcher Querlenker auch zwei oder mehr Durchgriffsöffnungen aufweisen und dennoch den an einem solchen Lenker gestellten Anforderungen genügen.

Weitere Ausgestaltungen und Vorteile der Erfindung ergeben sich aus der nachfolgenden Beschreibung eines Ausführungsbeispiels unter Bezugnahme auf die beigefügten Figuren. Es zeigen:
- **Fig. 1:**: Eine perspektivische Ansicht eines Querlenkers für eine Fahrzeugradaufhängung,
- **Fig. 2:**: eine perspektivische Ansicht des Querlenkers der Figur 1 mit Blick auf die Unterseite des Querlenkers gemäß der Darstellung der Figur 1
- **Fig. 3:**: eine Draufsicht auf den Querlenker in der Darstellung der Figur 2,
- **Fig. 4:**: einen Schnitt durch den Querlenker entlang der Linie A - A der Figur 3 und
- **Fig. 5:**: einen Schnitt durch den Querlenker entlang der Linie B - B der Figur 3.

Ein Querlenker 1 als Komponente für eine Fahrzeugradaufhängung ist im Wege eines Umformprozesses aus einem Stahlblechrohling hergestellt.

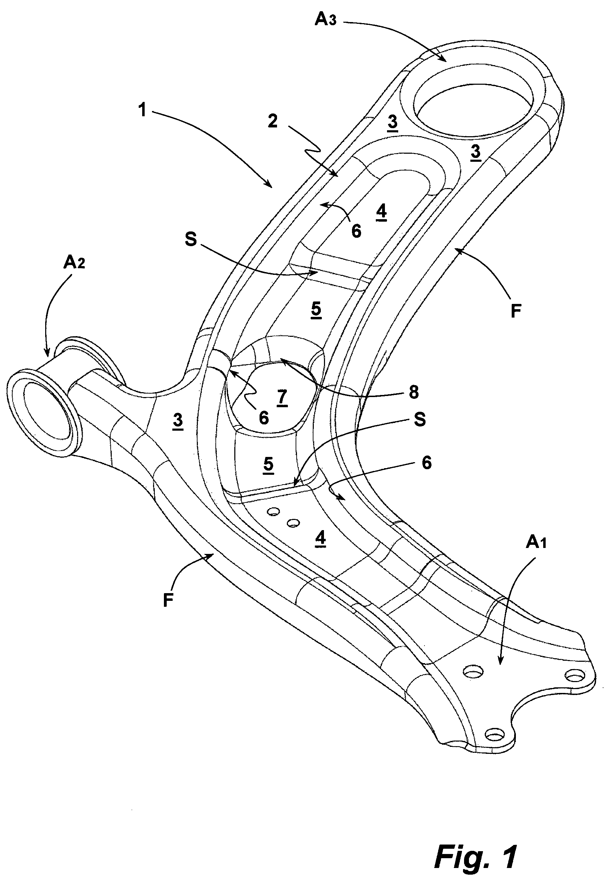

Der abgebildete Querlenker 1 ist einschalig. Der Querlenker 1 verfügt über drei Anschlussstellen A₁, A₂, A₃. Die Anschluss A₁ ist konzipiert, um an einer radseitigen Fahrwerkskomponente befestigt zu werden. Die Anschlussstellen A₂, A₃ sind als Lagerbuchse (Anschlussstelle A₂) bzw. als Lagerauge (Anschlussstelle A₃) ausgebildet. Mit den Anschlussstellen A₂, A₃ wird der Querlenker 1 unter Zwischenschaltung von Gummi-Metall-Verbundlagern fahrzeugseitig angeschlossen. Die Verbindung zwischen den Anschlussstellen A₁ und A₃ ist durch einen gebogenen Abschnitt verwirklicht, an den ein Fortsatz zu der Anschlussstelle A₂ angeformt ist. Der Querlenker 1 verfügt über einen Boden 2, an den randlich aus der Ebene des Bodens 2 und aus der Perspektive der Figur 1 nach unten abgekantete Flansche F angeformt sind. Die Flansche F stellen die äußere Versteifungsschenkel einer nachstehend näher beschriebenen Profilierung zur Ausbildung von den Verlauf des Bodens 2 einfassender Träger. Der Boden 2 ist durch eine bei dem dargestellten Ausführungsbeispiel zweistufig ausgeführte Einprägung in Bereiche gegliedert, die nicht geprägt sind, solche mit einer ersten Prägetiefe und solche mit einer zweiten Prägetiefe.

Die ungeprägten Bereiche sind an einigen Stellen des Bodens 2 in Figur 1 mit dem Bezugszeichen 3 gekennzeichnet. Bei dem dargestellten Ausführungsbeispiel existieren zwei Bereiche 4 mit der ersten Prägetiefe. Die gegenüber diesen Bereichen 4 abgesetzten Bereiche mit höherer Prägetiefe sind mit dem Bezugszeichen 5 gekennzeichnet. Durch die Prägungen werden an den Übergängen von einer Prägestufe zur nächsten, bei dem dargestellten Ausführungsbeispiel von den Bereichen 4 in den Bereich 5 quer zur Längserstreckung des Lenkers 1 verlaufende Versteifungsstrukturen nach Art von Sicken S gebildet, wodurch der Querlenker 1 eine zusätzliche Querversteifung erhält. Zudem wird durch die Einprägung, die dem Verlauf der äußeren Flansche F folgt, jeweils ein parallel oder etwa parallel zu den äußeren Flanschen F verlaufender innerer Versteifungsschenkel 6 gebildet, wodurch die Knickfestigkeit vor allem in der Ebene des Querlenkers 1 nicht unmaßgeblich erhöht wird. Infolge der Einprägung und der äußeren Flansche F weist der Querlenker 1 randlich eine U-förmige Profilierung auf.

Etwa in der Mitte des Bereiches 5 mit der zweiten, größeren Prägetiefe ist in dem Boden 2 eine Durchgriffsöffnung 7 eingebracht. Figur 1 zeigt, dass die Durchgriffsöffnung 7 einen nach unten ausgestellten umlaufenden, an den Boden 2 bzw. den Bodenbereich 5 angeformten Kragen 8 aufweist.

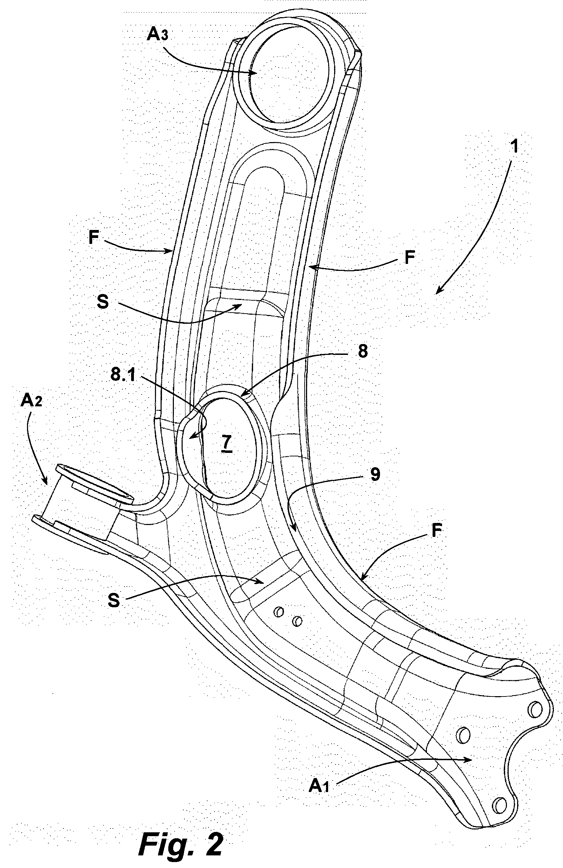

Figur 2 zeigt den Querlenker 1 in einer Ansicht auf die Unterseite der Darstellung desselben der Figur 1. Die Abkantung und Ausbildung der äußeren Flansche F gegenüber dem Boden 2 ist deutlich erkennbar. In einem Abschnitt ist ein äußerer Flansch F nochmals nach innen abgekantet, und zwar an dem Abschnitt des äußeren Flansches F an der Innenseite des Querlenkers 1 zwischen der Anschlussstelle A₁ und der Durchgriffsöffnung 7.

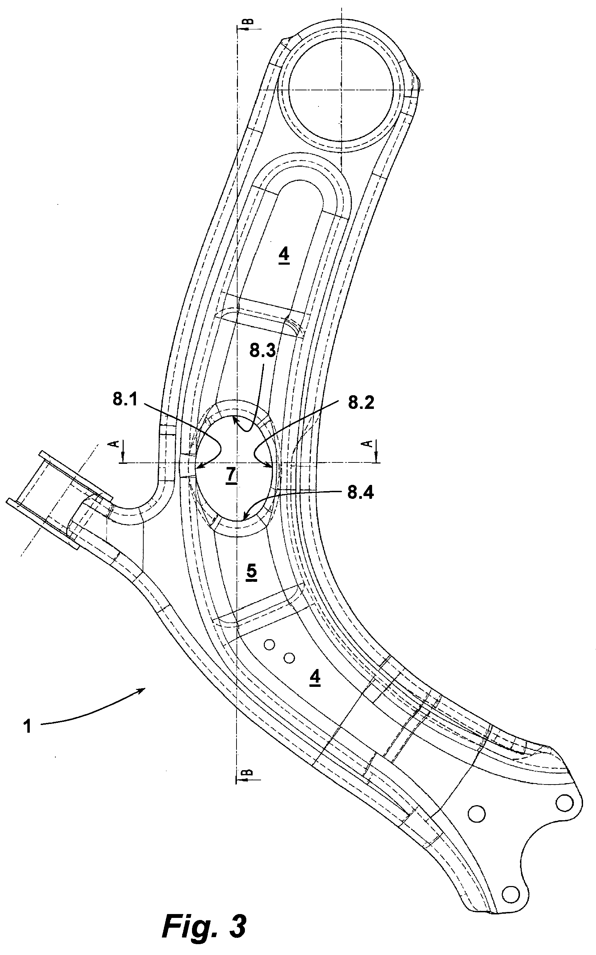

In Figur 1 war bereits erkennbar, dass die Querschnittsgeometrie der Durchgriffsöffnung 7 elliptisch ausgeführt ist. Die Durchgriffsöffnung 7 wird, wie aus Figuren 2 und 3 deutlich erkennbar, durch Abschnitte unterschiedlicher Begrenzungsgeometrien eingefasst. Aufgrund der elliptischen Geometrie der Durchgriffsöffnung 7 verfügt diese über zwei Abschnitte 8.1, 8.2 mit einem geringeren Krümmungsradius. Diese Kragenabschnitte 8.1, 8.2 folgen zumindest abschnittsweise annährend dem Verlauf der äußeren Kontur des Querlenkers 1 und damit dem äußeren Flansch F. Da die inneren Versteifungsschenkel 6 ebenfalls dem äußeren Flansch F folgen, ist in diesen Abschnitten 8.1, 8.2 die Kontur der Durchgriffsöffnung 7 an den Verlauf der inneren Versteifungsschenkel 6 abschnittsweise angenähert, der Kragenabschnitt 8.1 ist sogar Teil des inneren Versteifungsschenkels 6 bzw. verlängert diesen in Prägerichtung. Die diese Abschnitte 8.1, 8.2 verbindenden Abschnitte 8.3, 8.4 weisen einen deutlich kleineren Radius auf. Zum Ausbilden des Kragens 8, bestehend aus seinen Abschnitten 8.1, 8.2, 8.3, 8.4, ist vor dem Ziehvorgang zum Umformen des Bodens 2 in diesem Bereich eine Öffnung durch Ausstanzen eines Stanzlings vorgenommen worden. Die Geometrie dieser zum Durchführen des Ziehstempels vorgesehenen Öffnung ist bezogen auf die zu erstellende Durchgriffsöffnung 7 außermittig angeordnet, und zwar dergestalt, damit der Kragen 8 in einem Abschnitt 8.1 eine größere Höhe aufweist als in den angrenzenden Abschnitten 8.3, 8.4. Die größere Höhe des Kragens 8 in seinem Abschnitt 8.1 ist deutlich in den Figuren 2, 4 und 5 erkennbar.

Aufgrund des relativ großen Radius in den Abschnitten 8.1, 8.2 werden bei dem Vorgang des Umformens durch Hindurchführen eines Formstempels durch die zuvor in den Boden 2 eingebrachte Öffnung die zentralen Bereiche dieser Abschnitte 8.1, 8.2 gegenüber dem Boden 2 im Wesentlichen nur gebogen. Mithin werden diese Abschnitte vornehmlich durch einen Schwenkbiegeprozess umgeformt, bei dem keine, allenfalls eine tolerierbare Materialausdünnung stattfindet. Eine Materialausdünnung findet dagegen in den Kragenabschnitten 8.3, 8.4 aufgrund ihres deutlich kleineren Radius statt. Dieses ist jedoch nicht von Relevanz, da für die Steifigkeit des Querlenkers 1 in der Verbindungsrichtung zwischen den Anschlussstellen A₁ und A₂ vornehmlich die Kragenabschnitte 8.1, 8.2 wirken. Wie durch das Ausführungsbeispiel gezeigt, besteht bei dem beschriebenen Konzept sogar die Möglichkeit, die Kragenhöhe gegenüber dem herkömmlich Möglichen zu vergrößern und daher diesen Lenkerabschnitt zusätzlich zu versteifen.

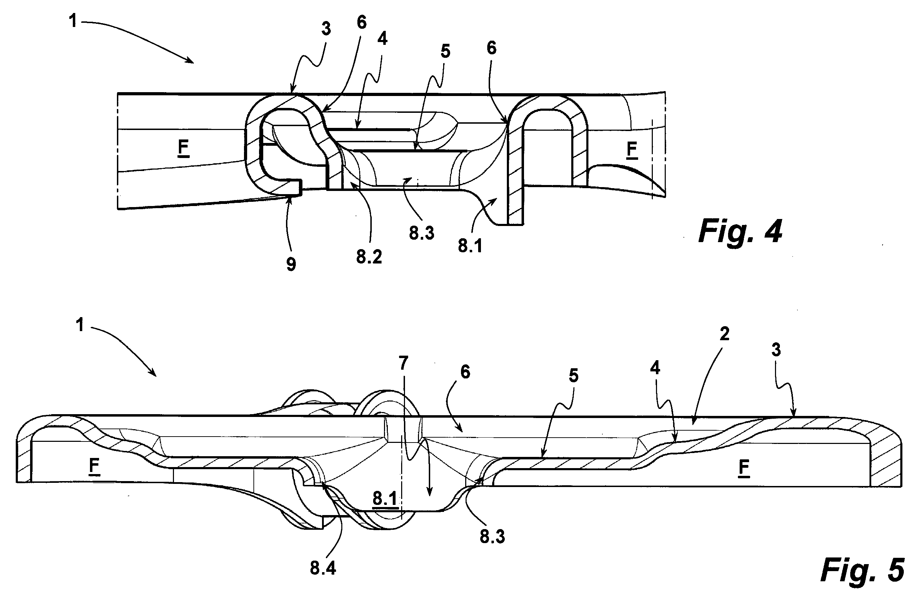

Der Querschnitt durch den Querlenker 1 der Figur 4 lässt die vorbeschriebene Geometrie deutlich erkennen. Der Kragenabschnitt 8.1 ist Teil des inneren Versteifungsschenkels 6 bzw. verlängert diesen in Prägerichtung, wodurch die als Träger wirksame Profilierungshöhe in diesem Bereich deutlich erhöht ist. Durch die Einprägung ist in den Bereichen 4, 5 der Querlenker 1 randlich durch eine im Wesentlichen U-förmige Profilierung, gebildet durch die äußeren Flansche F, die inneren Versteifungsschenkel 6 und die diese verbindenden ungeprägten Abschnitte jeweils ein U-Träger ausgebildet. In dem Querschnitt der Figur 4 ist auch die Anordnung der Abkantung 9 erkennbar, durch die vor allem die Torsionssteifigkeit des Querlenkers 1 in diesem Abschnitt erhöht ist.

Die Erfindung ist anhand eines Ausführungsbeispiels beschrieben worden. Ohne den Umfang der geltenden Ansprüche zu verlassen, ergeben sich für einen Fachmann zahlreiche weitere Ausgestaltungen, die Erfindung verwirklichen zu können, ohne dass dieses im Einzelnen im Rahmen dieser Ausführungen dargelegt werden müsste. Gleichwohl zählen auch diese Ausgestaltungen zum Offenbarungsgehalt dieser Beschreibungen.

### Bezugszeichenliste

- 1: Querlenker
- 2: Boden
- 3: ungeprägter Bereich des Bodens
- 4: Bodenbereich mit erster Prägetiefe
- 5: Bodenbereich mit zweiter Prägetiefe
- 6: Innerer Versteifungsschenkel
- 7: Durchgriffsöffnung
- 8: Kragen
- 9: Abkantung
- A₁ - A₃: Anschlussstelle

- F: Äußerer Flansch
- S: Sicke

## Patentansprüche

1. Lenker für eine Fahrzeugradaufhängung, gefertigt als Blechumformteil mit wenigstens zwei Anschlussstellen (A₁ - A₃), umfassend einen wenigstens zwei Anschlussstellen (A₁ - A₃) verbindenden Boden (2), eine der Längserstreckung des Bodens (2) folgende Einprägung (4, 5), wodurch entlang derselben parallel oder etwa parallel zu dem äußeren Rand des Bodens (2) verlaufende innere Versteifungsschenkel (6) gebildet sind, und eine in den Boden (2) der Einprägung (5) eingebrachte Durchgriffsöffnung (7) mit einem an den Boden (2) angeformten Kragen (8), **dadurch gekennzeichnet, dass** sich die Durchgriffsöffnung (7) im Bereich der Einprägung (4, 5) befindet und eine von der kreisrunden Querschnittsgeometrie abweichende Geometrie aufweist, welche Querschnittsgeometrie durch mehrere sich zumindest teilweise in ihrer Begrenzungskontur unterscheidende Durchgriffsöffnungsabschnitte (8.1, 8.2, 8.3, 8.4) gebildet wird, von welchen Abschnitten (8.1, 8.2, 8.3, 8.4) zumindest einer an den Verlauf des diesem nächstliegenden Versteifungsschenkels (6) angenähert ist oder diesem wenigstens teilweise entspricht.

2. Lenker nach Anspruch 1, **dadurch gekennzeichnet, dass** die Querschnittsgeometrie der Durchgriffsöffnung (7) elliptisch ist.

3. Lenker nach Anspruch 1 oder 2, **dadurch gekennzeichnet, dass** der angeformte Kragen (8) über seinen Umfang gesehen eine unterschiedliche Höhe aufweist, wobei die Höhe des Kragens (8) in dem zumindest einen dem Verlauf des nächstliegenden Versteifungsschenkels (6) angenäherten oder diesem wenigstens teilweise entsprechenden Abschnitt (8.1) größer ist als in den daran angrenzenden Durchgriffsöffnungsabschnitten (8.3, 8.4).

4. Lenker nach einem der Ansprüche 1 bis 3, **dadurch gekennzeichnet, dass** der an den Verlauf des nächstliegenden Versteifungsschenkels (6) angenäherte oder diesem wenigstens teilweise entsprechende Durchgriffsöffnungseinfassungsabschnitt (8.1) zumindest in einem Teilabschnitt Teil des inneren Versteifungsschenkels (6) ist oder eine Verlängerung in Bezug auf seine Höhe zu diesem ist.

5. Lenker nach einem der Ansprüche 1 bis 3, **dadurch gekennzeichnet, dass** die Einprägung (4, 5) mehrstufig ausgeführt ist und diese einen oder mehrere Bereiche (4) mit einer ersten Prägetiefe und wenigstens einen Bereich (5) mit einer zweiten Prägetiefe aufweist, wobei die zweite Prägetiefe größer ist als die erste Prägetiefe.

6. Lenker nach Anspruch 5, **dadurch gekennzeichnet, dass** sich die Durchgriffsöffnung im Bereich der Einprägung (5) mit der zweiten Prägetiefe befindet und der an den Verlauf des nächstliegenden Versteifungsschenkels (6) angenäherte oder diesem wenigstens teilweise entsprechende Durchgriffsöffnungseinfassungsabschnitt (8.1) zumindest in einem Teilabschnitt Teil des inneren Versteifungsschenkels (6) ist oder eine Verlängerung in Bezug auf seine Höhe zu diesem ist.

7. Lenker nach Anspruch 5 oder 6, **dadurch gekennzeichnet, dass** durch die mehrstufige Einprägung (4, 5) sickenartig wirkende Übergangsbereiche geschaffen sind.

8. Lenker nach einem der Ansprüche 1 bis 7, **dadurch gekennzeichnet, dass** der äußere Rand des Bodens (2) durch gegenüber der Ebene des Bodens (2) abgekantete und sich entlang des Randes des Bodens (2) erstreckende äußere Flansche (F) als Versteifungsschenkel gebildet ist.

9. Lenker nach einem der Ansprüche 1 bis 8, **dadurch gekennzeichnet, dass** dieser ein Querlenker (1) ist.

## Claims

1. A suspension arm for a vehicle wheel suspension system, manufactured as a formed sheet-metal part having at least two connection points (A₁ - A₃), comprising a base (2) connecting at least two connection points (A₁ - A₃), an impression (4, 5) which follows the longitudinal extent of the base (2), thus forming inner stiffening limbs (6) running along said impression parallel or approximately parallel to the outer edge of the base (2), also comprising a reach-through opening (7) which is introduced into the base (2) of the impression (5) and which has a collar (8) integrally formed on the base (2), **characterised in that** the reach-through opening (7) is located in the region of the impression (4, 5) and has a geometry deviating from the circular cross-sectional geometry, which circular cross-sectional geometry is formed by a plurality of reach-through opening sections (8.1, 8.2, 8.3, 8.4) whose boundary contours at least partially differ, and of which sections (8.1, 8.2, 8.3, 8.4) at least one is approximated, or at least partially corresponds, to the profile of the stiffening limb (6) that is closest to it.

2. The suspension arm of claim 1 **characterised in that** the cross-sectional geometry of the reach-through opening (7) is elliptical.

3. The suspension arm of claim 1 or 2 **characterised in that** the integrally formed collar (8) comprises, when viewed over its periphery, a different height, with the height of the collar (8) in the at least one section (8.1) which is approximated, or at least partially corresponds, to the profile of the stiffening limb (6) that is closest to it being greater than in the adjacent reach-through opening sections (8.3, 8.4).

4. The suspension arm of any one of claims 1 to 3 **characterised in that** the reach-through opening skirted section (8.1) which is approximated, or at least partially corresponds, to the profile of the stiffening limb (6) forms part - at least with a partial section - of the inner stiffening limb (6) or is an extension thereof in regard to its height.

5. The suspension arm of any one of claims 1 to 3 **characterised in that** the impression (4, 5) is executed in a plurality of steps and comprises one or a plurality of regions (4) having a first impression depth and at least one region (5) having a second impression depth, the second impression depth being greater than the first impression depth.

6. The suspension arm of claim 5 **characterised in that** the reach-through opening is located in the region of the impression (5) which has the second impression depth and the reach-through opening skirted section (8.1) which is approximated, or at least partially corresponds, to the profile of the stiffening limb (6) forms at least a partial section of the inner stiffening limb (6) or is an extension thereof in regard to its height.

7. The suspension arm of claim 5 or 6 **characterised in that** transitional regions acting in the manner of beads are created by the multiple-step impression (4, 5).

8. The suspension arm of any one of claims 1 to 7 **characterised in that** the outer edge of the base (2) is formed by outer flanges (F) canted relative to the plane of the base (2) and extending along the edge of the base (2) as stiffening limbs.

9. The suspension arm of any one of claims 1 to 8 **characterised by** being a transverse suspension arm (1).

## Revendications

1. Système de direction pour une suspension de roue d'un véhicule, fabriqué en tant que pièce en tôle mise en forme avec au moins deux zones de raccordement (A₁ - A₃), comportant un fond (2) reliant au moins deux zones de raccordement (A₁ - A₃), un estampage (4, 5) suivant l'étendue longitudinale du fond (2), par lequel est formé, sur tout son long un montant de renforcement (6) intérieur qui s'étend parallèlement ou de façon sensiblement parallèle au bord externe du fond (2), et une ouverture (7) de passage aménagée dans le fond (2) de l'estampage (5) avec un collet (8) moulé sur le fond (2), **caractérisé en ce que** l'ouverture (7) de passage se trouve dans la zone de l'estampage (4, 5) et présente une géométrie divergente de la géométrie de section transversale ronde, laquelle géométrie de section transversale étant formée par plusieurs tronçons d'ouverture (8.1, 8.2, 8.3, 8.4) de passage se différenciant du moins partiellement par leurs contours de limitation, parmi lesquels tronçons (8.1, 8.2, 8.3, 8.4) au moins un s'approche du tracé du montant de renforcement (6) qui lui est le plus proche ou lui correspond au moins partiellement.

2. Système de direction selon la revendication 1, **caractérisé en ce que** la géométrie de section transversale de l'ouverture (7) de passage est elliptique.

3. Système de direction selon la revendication 1 ou 2, **caractérisé en ce que** le collet (8) moulé présente, en considérant sa périphérie, une hauteur différente, la hauteur du collet (8) étant, dans au moins un tracé du montant de renforcement (6) le plus proche ou dans le tronçon (8.1) qui lui correspond au moins partiellement, plus grande que dans les tronçons d'ouverture (8.3, 8.4) de passage voisins de ce dernier.

4. Système de direction selon l'une des revendications 1 à 3, **caractérisé en ce que** le tronçon (8.1) de bordure de l'ouverture de passage qui s'approche du tracé du montant de renforcement (6) le plus proche ou qui lui correspond au moins partiellement, fait partie, au moins sur un tronçon partiel, du montant de renforcement (6) intérieur ou est un prolongement de ce dernier par rapport à sa hauteur.

5. Système de direction selon l'une des revendications 1 à 3, **caractérisé en ce que** l'estampage (4, 5) est réalisé sur plusieurs niveaux et que celui-ci présente une ou plusieurs zones (4) avec une première profondeur d'estampage et au moins une zone (5) avec une seconde profondeur d'estampage, la seconde profondeur d'estampage étant plus importante que la première profondeur d'estampage.

6. Système de direction selon la revendication 5, **caractérisé en ce que** l'ouverture de passage se trouve dans la zone de l'estampage (5) avec la seconde profondeur d'estampage et le tronçon de bordure de l'ouverture de passage (8.1) qui s'approche du tracé du montant de renforcement (6) le plus proche ou qui lui correspond au moins partiellement, fait partie, au moins sur un tronçon partiel du montant de renforcement (6) intérieur ou est un prolongement de ce dernier par rapport à sa hauteur.

7. Système de direction selon la revendication 5 ou 6, **caractérisé en ce que**, en raison de l'estampage (4, 5) sur plusieurs niveaux, des zones de transition faisant un effet de moulure sont créées.

8. Système de direction selon l'une des revendications 1 à 7, **caractérisé en ce que** le bord extérieur du fond (2) est formé en tant que montant de renforcement par des brides (F) extérieures s'étendant le long du bord du fond (2) et pliées par rapport au plan du fond (2).

9. Système de direction selon l'une des revendications 1 à 8, **caractérisé en ce que** celui-ci est un bras de suspension transversal (1).
